# EUROPEAN PATENT SPECIFICATION

(11) **EP 4 324 367 B1**
(45) Date of publication and mention of the grant of the patent: **29.01.2025**
(21) Application number: 22937657.9
(22) Date of filing: 19.12.2022
(51) Int. Cl.: A47K 10/16, B32B 37/12

(54) **METHOD FOR PRODUCING TOILET PAPER ROLL**
VERFAHREN ZUR HERSTELLUNG EINER TOILETTENPAPIERROLLE
PROCÉDÉ DE FABRICATION DE ROULEAU DE PAPIER HYGIÉNIQUE

(30) Priority: 28.04.2022 JP 2022074149
(43) Date of publication of application: 21.02.2024
(73) Proprietor: Corelex Shin-Ei Co., Ltd., Fuji-shi, Shizuoka 421-3306 (JP)
(72) Inventor: KUROSAKI, Satoshi, Fuji-shi, Shizuoka (JP)
(74) Representative: Strehl Schübel-Hopf & Partner
(86) International application number: PCT/JP2022/046611
(87) International publication number: WO 2023/210056

(56) References cited:
- EP-B1- 1 841 470
- WO-A1-02/14061
- WO-A1-2006/099881
- JP-A- 2007 260 161
- JP-A- 2012 000 476
- JP-A- 2022 031 007
- KR-A- 20180 041 290

## Description

### [Technical Field]

The present disclosure relates to a method of manufacturing a 4-ply toilet paper roll that is formed by laminating and rolling up four sheets of paper into a roll.

### [Background Art]

Until now, a (1-ply) toilet paper roll formed by rolling up one sheet of paper into a roll or a 2-ply toilet paper roll formed by laminating and rolling up two sheets of base paper into a roll has been manufactured and sold generally.

Furthermore, a toilet paper roll formed by laminating and rolling up three or more sheets of paper into a roll has also been manufactured and sold with intent to increase absorbency.

When the three or more sheets of paper are laminated as described above, the laminated paper is so thick that it is difficult to tear off a pulled-out portion of the laminated paper from a paper roll.

In some of the paper rolls formed by laminating the three or more sheets of paper, perforations are formed in the laminated paper at constant intervals to make the pulled-out portion of the laminated paper easily torn off from the paper roll.

In regard to the manufacturing of the 3-ply toilet paper roll, for example, there is known a method of gluing one ply on a front side to at least one ply in an intermediate layer, forming a micro-embossed pattern in two plies on a rear side, and laminating those three plies in order that the individual plies may become hard to peel off. In regard to the manufacturing of the 4-ply toilet paper roll, there is known a method of forming a decoration embossed pattern in two plies on a front side and forming a micro-embossed pattern in two plies on a rear side. The latter method further includes a step of gluing at least one rear-side ply of the two plies on the front side to at least one front-side ply of the two plies on the rear side (Patent Literature (PTL) 1).

In a variation of the above-mentioned 4-ply toilet paper roll, two layers forming intermediate layers of four plies are glued together. Furthermore, a decoration embossed pattern of large size is formed in two outer-side layers of the four plies, and a micro-embossed pattern formed in the two layers (intermediate layers) glued together are brought into strong contact with the decoration embossed pattern to be laminated in order that those layers may become hard to peel off.

In another example of the above-mentioned 4-ply toilet paper roll, the decoration embossed pattern is formed in one ply on the front side, the micro-embossed pattern is formed in three plies on the rear side, and the one ply on the front side is glued to the second ply from the front side.

### [Citation List]

### [Patent Literature]

PTL 1: Japanese Unexamined Patent Application Publication No. 2018-23561

### [Summary of Invention]

### [Technical Problem]

The 4-ply toilet paper roll manufactured by laminating multiple sheets of paper as described above includes a portion in which those sheets are laminated, for example, while embossed patterns of different sizes are brought into strong contact with each other without using any bonding liquid such as water or glue. Accordingly, there is a possibility that, when a desired length of the toilet paper is torn off in a state in which the toilet paper roll is attached to a toilet paper holder, the individual laminated paper sheets may peel off each other starting from a torn-off end. If the laminated paper sheets stick out of the toilet paper holder in the loosely peeled-off state, an appearance of the toilet paper deteriorates.

The present disclosure has been made in consideration of the above-described problem and provides a toilet paper roll manufacturing method with which, when paper a 4-ply toilet paper roll is torn off, individual layered sheets of the paper are prevented from peeling off each other, and a good appearance is ensured.

### [Solution to Problem]

A toilet paper roll manufacturing method according to the present disclosure includes a first step of pulling out base paper from each of multiple base paper rolls; a second step of introducing multiple sheets of the base paper to a lamination unit, laminating the multiple sheets of the base paper, and forming 4-ply toilet paper; a third step of drying the 4-ply toilet paper; and a fourth step of rolling up the 4-ply toilet paper and manufacturing a 4-ply toilet paper roll, wherein the second step includes a fifth step of separating the multiple sheets of the base paper introduced to the lamination unit into multiple sheets of 1-ply base paper; a sixth step of operating a first sprayer to spray a bonding liquid between first base paper and second base paper among the multiple sheets of 1-ply base paper and forming first laminated paper made up of the first base paper and the second base paper; a seventh step of operating a second sprayer to spray the bonding liquid between third base paper and fourth base paper among the multiple sheets of 1-ply base paper and forming second laminated paper made up of the third base paper and the fourth base paper; and an eighth step of operating a third sprayer to spray the bonding liquid between the first laminated paper and the second laminated paper, and operating a first pressure roller to stack and press the first laminated paper and the second laminated paper and to form the 4-ply toilet paper, the sixth step and the seventh step being performed simultaneously.

The sixth step includes applying the bonding liquid to adhere to the first base paper and the second base paper, and stacking and pressing the first base paper and the second base paper by a second pressure roller, and the seventh step includes applying the bonding liquid to adhere to the third base paper and the fourth base paper, and stacking and pressing the third base paper and the fourth base paper by a third pressure roller.

The eighth step includes operating the second sprayer to spray the bonding liquid in an amount enough for causing fiber-to-fiber gaps in the first laminated paper and fiber-to-fiber gaps in the second laminated paper to widen due to permeation of the bonding liquid; and operating the first pressure roller to apply pressure such that water of the bonding liquid is discharged from the fiber-to-fiber gaps in the first laminated paper and the fiber-to-fiber gaps in the second laminated paper.

### [Advantageous Effects of Invention]

According to the present disclosure, when paper the 4-ply toilet paper roll is torn off, individual layered sheets of the paper are prevented from peeling off each other, and a good appearance is ensured.

### [Brief Description of Drawings]

Fig. 1 is an explanatory view illustrating a schematic configuration of a toilet paper roll manufacturing apparatus using a toilet paper roll manufacturing method according to an embodiment of the present disclosure.
Fig. 2 is an explanatory view illustrating a schematic configuration of a lamination unit included in the toilet paper roll manufacturing apparatus of Fig. 1.
Fig. 3 is an explanatory view illustrating another configuration example of the toilet paper roll manufacturing apparatus of Fig. 1.

### [Description of Embodiments]

An embodiment of the present invention will be described below.

### (Embodiment)

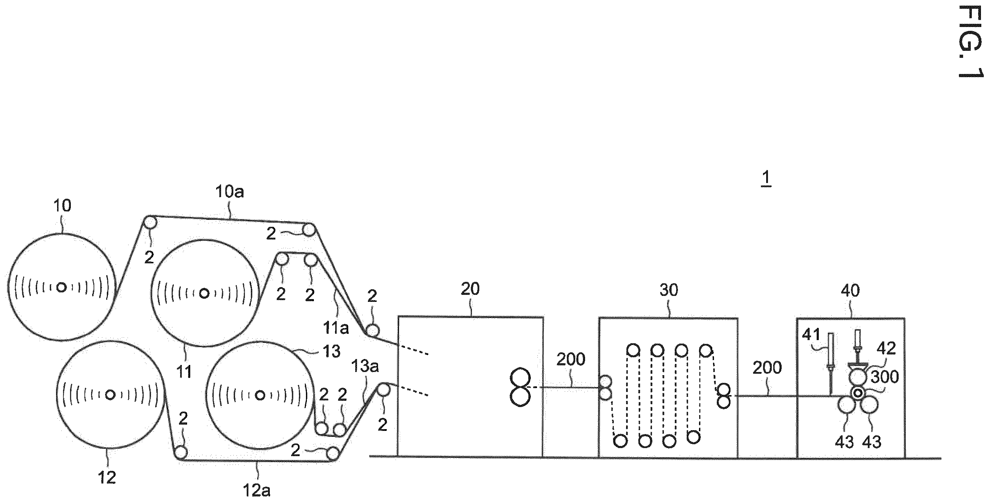

Fig. 1 is an explanatory view illustrating a schematic configuration of a toilet paper roll manufacturing apparatus 1 using a toilet paper roll manufacturing method according to the embodiment of the present disclosure.

The toilet paper roll manufacturing apparatus 1 is constituted to manufacture a 4-ply toilet paper roll 300.

The toilet paper roll manufacturing apparatus 1 includes, for example, guide rollers 2 for moving base paper 10a, base paper 11a, base paper 12a, and base paper 13a a base paper roll 10, a base paper roll 11, a base paper roll 12, and a base paper roll 13, respectively, to a lamination unit 20, and the lamination unit 20 for stacking the base paper 10a, the base paper 11a, the base paper 12a, and the base paper 13a and forming 4-ply toilet paper 200.

The toilet paper roll manufacturing apparatus 1 further includes a drying unit 30 for drying the 4-ply toilet paper 200, and a rolling-up unit 40 for rolling up the 4-ply toilet paper 200 after being dried and forming the 4-ply toilet paper roll 300.

The base paper 10a, the base paper 11a, the base paper 12a, and the base paper 13a described here, by way of example, are each 1-ply base paper.

The toilet paper roll manufacturing apparatus 1 illustrated in Fig. 1 is constituted to manufacture the 4-ply toilet paper roll 300 using the base paper 10a, the base paper 11a, the base paper 12a, and the base paper 13a each being a 1-ply paper sheet.

In the toilet paper roll manufacturing apparatus 1 of Fig. 1, for example, the multiple guide rollers 2 are installed to guide the base paper 10a the base paper roll 10 and the base paper 11a the base paper roll 11 to be stacked and introduced to the lamination unit 20, and to guide the base paper 12a the base paper roll 12 and the base paper 13a the base paper roll 13 to be stacked and introduced to the lamination unit 20.

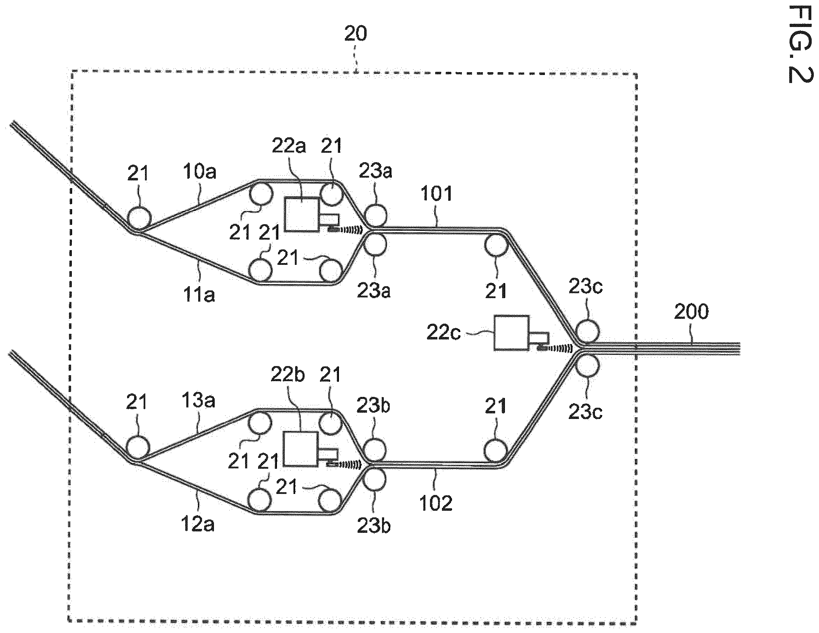

Fig. 2 is an explanatory view illustrating a schematic configuration of the lamination unit 20 included in the toilet paper roll manufacturing apparatus 1 of Fig. 1.

The lamination unit 20 includes a sprayer 22a for spraying a bonding liquid, such as an aqueous solution containing water, a perfume ingredient, and a deodorant ingredient, to stacked portions of the base paper 10a and the base paper 11a, and a sprayer 22b for spraying the bonding liquid to stacked portions of the base paper 12a and the base paper 13a. By spraying water from one of the sprayers 22a and 22b and spraying an aqueous solution containing the perfume ingredient, for example, from the other one, a concentration of the above-mentioned aqueous solution can be controlled.

The lamination unit 20 includes multiple guide rollers 21 for separating the base paper 10a and the base paper 11a having been held in a stacked state when they are introduced to the lamination unit 20, and for moving the base paper 10a and the base paper 11a such that a surface of the base paper 10a and a surface of the base paper 11a, both the surfaces having been held in contact with each other in the stacked state, are positioned to face the location of a space where the sprayer 22a sprays the bonding liquid.

Furthermore, the lamination unit 20 includes other multiple guide rollers 21 for separating the base paper 12a and the base paper 13a having been held in a stacked state when they are introduced to the lamination unit 20, and for moving the base paper 12a and the base paper 13a such that a surface of the base paper 12a and a surface of the base paper 13a, both the surfaces having been held in contact with each other in the stacked state, are positioned to face the location of a space where the sprayer 22b sprays the bonding liquid.

The lamination unit 20 includes pressure rollers 23a for stacking the base paper 10a and the base paper 11a and pressing them at the location of the space where the sprayer 22a sprays the bonding liquid (or near that location), and pressure rollers 23b for stacking the base paper 12a and the base paper 13a and pressing them at the location of the space where the sprayer 22b sprays the bonding liquid (or near that location).

The lamination unit 20 further includes a sprayer 22c for, when laminated paper 101 formed by the pressure rollers 23a and laminated paper 102 formed by the pressure rollers 23b are stacked, spraying the bonding liquid to respective contact surfaces of the laminated paper 101 and the laminated paper 102.

Moreover, the lamination unit 20 includes other multiple guide rollers 21 for moving the laminated paper 101 and the laminated paper 102 to the location of a space where the sprayer 22c sprays the bonding liquid, and pressure rollers 23c for stacking the laminated paper 101 and the laminated paper 102 and pressing them at the location of the space where the sprayer 22c sprays the bonding liquid (or near that location).

An operation of the toilet paper roll manufacturing apparatus 1 will be described below.

In the toilet paper roll manufacturing apparatus 1 of Fig. 1, for example, long sheets of the base paper 10a, the base paper 11a, the base paper 12a, and the base paper 13a are the four single-ply base paper rolls 10, 11, 12, and 13, respectively, and are transferred to the lamination unit 20 by the multiple guide rollers 2.

In the lamination unit 20, the sheets of base paper 10a, 11a, 12a, and 13a introduced thereto by the guide rollers 2 are laminated after the bonding liquid has been applied to adhere to those sheets as described later, whereby the 4-ply toilet paper 200 of long size is formed.

The 4-ply toilet paper 200 formed in the lamination unit 20 is introduced to the drying unit 30 from the lamination unit 20.

The drying unit 30 includes, for example, multiple cylinders arranged in the inside and dries the 4-ply toilet paper 200 by letting the 4-ply toilet paper 200 having been introduced to the drying unit 30 to pass through the cylinders and by applying heat to the 4-ply toilet paper 200.

The 4-ply toilet paper 200 having been dried in the drying unit 30 is introduced to the rolling-up unit 40.

The rolling-up unit 40 rolls up the 4-ply toilet paper 200, introduced to the rolling-up unit 40, by a rolling-up pressure roller 42 and multiple rolling-up rollers 43. As a result, the 4-ply toilet paper roll 300 is manufactured.

Furthermore, the rolling-up unit 40 includes a cutter 41. After a predetermined length of the 4-ply toilet paper 200 has been rolled up by the rolling-up pressure roller 42 and the rolling-up rollers 43, the 4-ply toilet paper 200 introduced to the rolling-up unit 40 is cut by the cutter 41.

The rolling-up unit 40 repeats a step of successively rolling up the 4-ply toilet paper 200 introduced to the rolling-up unit 40 and a step of cutting the 4-ply toilet paper 200 by the cutter 41 as described above, thus continuing to manufacture the 4-ply toilet paper roll 300.

In some cases, for example, the rolling-up unit 40 may include a cutter (not illustrated) for forming perforations in the 4-ply toilet paper 200 along a width direction, may form the perforations in the 4-ply toilet paper 200 at predetermined intervals, and may manufacture the 4-ply toilet paper roll 300 with the perforations.

Fig. 2 is the explanatory view illustrating the schematic configuration of the lamination unit 20 included in the toilet paper roll manufacturing apparatus 1 of Fig. 1.

In the toilet paper roll manufacturing apparatus 1, for example, the base paper 10a and the base paper 11a are stacked and introduced to the lamination unit 20 by the guide rollers 2, and the base paper 12a and the base paper 13a are stacked and introduced to the lamination unit 20 by the other guide rollers 2.

The lamination unit 20 includes the multiple guide rollers 21 and the sprayers 22a, 22b, and 22c for spraying the above-mentioned bonding liquid.

The lamination unit 20 further includes, as described later, the pressure rollers 23a for pressing the base paper 10a and the base paper 11a in the stacked state, the pressure rollers 23b for pressing the base paper 12a and the base paper 13a in the stacked state, and the pressure rollers 23c for pressing the laminated paper 101 and the laminated paper 102 in the stacked state.

In the lamination unit 20, when the base paper 10a and the base paper 11a having been stacked by the guide rollers 2 as described above are introduced thereto, the base paper 10a and the base paper 11a are separated from each other and are then separately transferred to the vicinity of the sprayer 22a by the multiple guide rollers 21.

Those guide rollers 21 transfer the base paper 10a and the base paper 11a, for example, such that a rear surface of the base paper 10a and a front surface of the base paper 11a are positioned to face each other at the location of the space where the sprayer 22a sprays the bonding liquid. In other words, the guide rollers 21 transfer the base paper 10a and the base paper 11a in such a way that the rear surface of the base paper 10a and the front surface of the base paper 11a to face the location toward which the bonding liquid is sprayed from the sprayer 22a.

For the base paper 10a and the base paper 11a having been transferred to the location of the space where the bonding liquid sprayed is able to adhere to each base paper, the sprayer 22a sprays the bonding liquid toward, for example, the rear surface of the base paper 10a and the front surface of the base paper 11a (for adhering to those surfaces).

At that time, the sprayer 22a sprays the bonding liquid in an amount enough for, in a state in which fiber-to-fiber gaps on a rear surface side of the base paper 10a are widened and fiber-to-fiber gaps on a front surface side of the base paper 11a are widened due to permeation of the bonding liquid adhering to the surfaces, enabling the fibers to be intertwined when the base paper 10a and the base paper 11a are stacked.

The lamination unit 20 includes the pressure rollers 23a, for example, at the location of the space where the sprayer 22a sprays the bonding liquid (or near that location). The pressure rollers 23a bring the rear surface of the base paper 10a and the front surface of the base paper 11a, those surfaces including the adhering bonding liquid, into a contact (stacked) state, sandwich the base paper 10a and the base paper 11a, and apply pressure at such a level, for example, that the bonding liquid (water) permeated in the base paper 10a and the base paper 11a is discharged to the outside.

Stated another way, with the above-described pressing, the bonding liquid (water) acting to widen the fiber-to-fiber gaps on the rear surface side of the base paper 10a and the bonding liquid (water) acting to widen the fiber-to-fiber gaps on the front surface side of the base paper 11a are discharged from the fiber-to-fiber gaps, and the fibers are intertwined. Hence the 2-ply laminated paper 101 made up of the base paper 10a and the base paper 11a bonded to each other is formed.

Furthermore, in the lamination unit 20, when the base paper 12a and the base paper 13a having been stacked by the guide rollers 2 as described above are introduced thereto, the base paper 12a and the base paper 13a are separated from each other by the multiple guide rollers 21 and are then separately transferred to the vicinity of the sprayer 22b by the multiple guide rollers 21.

Those guide rollers 21 transfer the base paper 13a and the base paper 12a, for example, such that a rear surface of the base paper 13a and a front surface of the base paper 12a are positioned to face each other at the location of the space where the sprayer 22b sprays the bonding liquid. In other words, the guide rollers 21 transfer the base paper 13a and the base paper 12a in such a way that the rear surface of the base paper 13a and the front surface of the base paper 12a are positioned to face the location toward which the bonding liquid is sprayed from the sprayer 22b.

For the base paper 13a and the base paper 12a having been transferred to the location of the space where the bonding liquid sprayed is able to adhere to each base paper, the sprayer 22b sprays the bonding liquid toward, for example, the rear surface of the base paper 13a and the front surface of the base paper 12a (for adhering to those surfaces).

At that time, the sprayer 22b sprays the bonding liquid in an amount enough for, in a state in which fiber-to-fiber gaps on a rear surface side of the base paper 13a are widened and fiber-to-fiber gaps on a front surface side of the base paper 12a are widened due to permeation of the bonding liquid adhering to the surfaces, enabling the fibers to be intertwined when the base paper 13a and the base paper 12a are stacked.

The lamination unit 20 includes the pressure rollers 23b, for example, at the location of the space where the sprayer 22b sprays the bonding liquid (or near that location). The pressure rollers 23b bring the rear surface of the base paper 13a and the front surface of the base paper 12a, those surfaces including the adhering bonding liquid, into a contact (stacked) state, sandwich the base paper 13a and the base paper 12a, and apply pressure at such a level, for example, that the bonding liquid (water) permeated in the base paper 13a and the base paper 12a is discharged to the outside.

Stated another way, with the above-described pressing, the bonding liquid (water) acting to widen the fiber-to-fiber gaps on the rear surface side of the base paper 13a and the bonding liquid (water) acting to widen the fiber-to-fiber gaps on the front surface side of the base paper 12a are discharged from the fiber-to-fiber gaps, and the fibers are intertwined. Hence the 2-ply laminated paper 102 made up of the base paper 13a and the base paper 12a bonded to each other is formed.

The lamination unit 20 can simultaneously perform, for example, a step of forming the laminated paper 101 with the aid of the sprayer 22a, the pressure rollers 23a, and so on, and a step of forming the laminated paper 102 with the aid of the sprayer 22b, the pressure rollers 23b, and so on.

The laminated paper 101 formed by the pressure rollers 23a and the laminated paper 102 formed by the pressure rollers 23b are each transferred by the multiple guide rollers 21 to the location of the space where the sprayer 22c sprays the bonding liquid. Those guide rollers 21 transfer the laminated paper 101 and the laminated paper 102, for example, such that a rear surface of the laminated paper 101 and a front surface of the laminated paper 102 are positioned to face each other at the location of the space where the sprayer 22c sprays the bonding liquid. In other words, the guide rollers 21 transfer the laminated paper 101 and the laminated paper 102 in such a way that the rear surface of the laminated paper 101 and the front surface of the laminated paper 102 are positioned to face the location toward which the bonding liquid is sprayed from the sprayer 22c.

For the laminated paper 101 and the laminated paper 102 having been transferred to the location of the space where the bonding liquid sprayed is able to adhere to each laminated paper, the sprayer 22c sprays the bonding liquid toward, for example, the rear surface of the laminated paper 101 and the front surface of the laminated paper 102 (for adhering to those surfaces).

At that time, the sprayer 22c sprays the bonding liquid in an amount enough for, in a state in which fiber-to-fiber gaps on a rear surface side of the laminated paper 101 are widened and fiber-to-fiber gaps on a front surface side of the laminated paper 102 are widened due to permeation of the bonding liquid adhering to the surfaces, enabling the fibers to be intertwined when the laminated paper 101 and the laminated paper 102 are stacked.

The lamination unit 20 includes the pressure rollers 23c, for example, at the location of the space where the sprayer 22c sprays the bonding liquid (or near that location). The pressure rollers 23c bring the rear surface of the laminated paper 101 and the front surface of the laminated paper 102, those surfaces including the adhering bonding liquid, into a contact (stacked) state, sandwich the laminated paper 101 and the laminated paper 102, and apply pressure at such a level, for example, that the bonding liquid (water) permeated in the laminated paper 101 and the laminated paper 102 is discharged to the outside.

Stated another way, with the above-described pressing, the bonding liquid (water) acting to widen the fiber-to-fiber gaps on the rear surface side of the laminated paper 101 and the bonding liquid (water) acting to widen the fiber-to-fiber gaps on the front surface side of the laminated paper 102 are discharged from the fiber-to-fiber gaps, and the fibers are intertwined. Hence the 4-ply toilet paper 200 made up of the laminated paper 101 and the laminated paper 102 bonded to each other is formed.

The 4-ply toilet paper 200 formed by the pressure rollers 23c is dried by the drying unit 30 and rolled up by the rolling-up unit 40 as described above, whereby the 4-ply toilet paper roll 300 is manufactured.

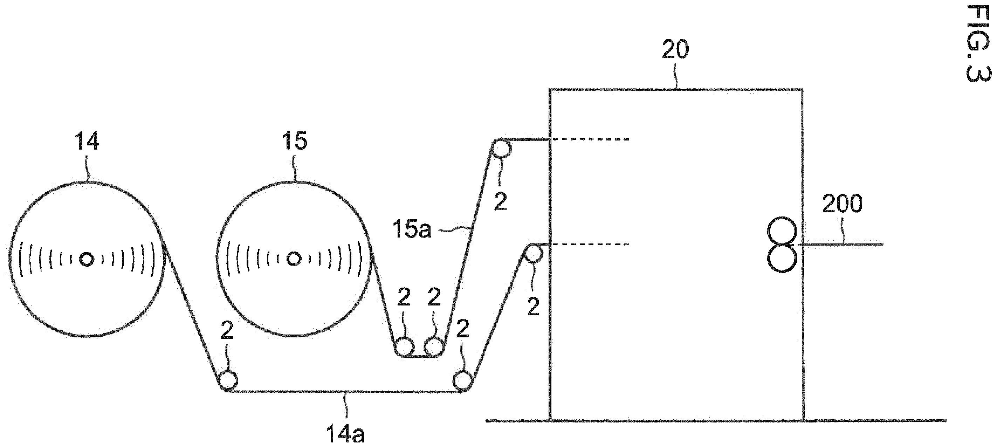

Fig. 3 is an explanatory view illustrating another configuration example of the toilet paper roll manufacturing apparatus 1 of Fig. 1. Fig. 3 illustrates part of the other configuration example of the toilet paper roll manufacturing apparatus 1, the part representing a section in which sheets of base paper 14a and 15a base paper rolls 14 and 15, respectively, are introduced to a lamination unit 20.

In the other configuration example of the toilet paper roll manufacturing apparatus 1, the lamination unit 20, a drying unit 30, a rolling-up unit 40, and so on are similar to those illustrated in Figs. 1 and 2.

The base paper roll 14 and the base paper roll 15 are formed, for example, by rolling up respectively the base paper 14a and the base paper 15a each of which is made up of 2-ply paper sheets that are not bonded to each other with the bonding liquid or the like.

In the other configuration example illustrated in Fig. 3, the 2-ply base paper 14a the base paper roll 14 and the 2-ply base paper 15a the base paper roll 15 are each guided by multiple guide rollers 2 and introduced to the lamination unit 20.

The lamination unit 20 illustrated in Fig. 3 has a similar configuration to that of the lamination unit 20 illustrated in Fig. 2. In the lamination unit 20, for example, the base paper 14a is separated into first 1-ply base paper (not illustrated) corresponding to the base paper 10a and second 1-ply base paper (not illustrated) corresponding to the base paper 11a, and similar treatment to that for the base paper 10a and the base paper 11a is performed on the first 1-ply base paper and the second 1-ply base paper.

Furthermore, in the lamination unit 20 in Fig. 3, the base paper 15a is separated into third 1-ply base paper (not illustrated) corresponding to the base paper 13a and fourth 1-ply base paper (not illustrated) corresponding to the base paper 12a, and similar treatment to that for the base paper 13a and the base paper 12a is performed on the third 1-ply base paper and the fourth 1-ply base paper.

In the lamination unit 20 in Fig. 3, too, the laminated paper 101 and the laminated paper 102 are formed, and the 4-ply toilet paper 200 is formed as in the above-described embodiment.

The toilet paper roll manufacturing apparatus 1 described here can be constituted to supply, to the lamination unit 20, not only the sheets of 1-ply base paper 10a, 11a, 12a, and 13a from the base paper rolls 10, 11, 12, and 13, respectively, but also the sheets of 2-ply base paper 14a and 15a from the base paper rolls 14 and 15, respectively.

### [Reference Signs List]

1 toilet paper roll manufacturing apparatus
2 guide roller
10 base paper roll
10a base paper
11 base paper roll
11a base paper
12 base paper roll
12a base paper
13 base paper roll
13a base paper
14 base paper roll
14a base paper
15 base paper roll
15a base paper
20 lamination unit
21 guide roller
22a, 22b, 22c sprayer
23a, 23b, 23c pressure roller
30 drying unit
40 rolling-up unit
41 cutter
42 rolling-up pressure roller
43 rolling-up roller
101, 102 laminated paper
200 4-ply toilet paper
300 4-ply toilet paper roll

## Claims

1. A toilet paper roll manufacturing method comprising:
a first step of pulling out base paper from each of multiple base paper rolls;
a second step of introducing multiple sheets of the base paper to a lamination unit, laminating the multiple sheets of the base paper, and forming 4-ply toilet paper;
a third step of drying the 4-ply toilet paper; and
a fourth step of rolling up the 4-ply toilet paper and manufacturing a 4-ply toilet paper roll,
wherein the second step comprises:
a fifth step of separating the multiple sheets of the base paper introduced to the lamination unit into multiple sheets of 1-ply base paper;
a sixth step of operating a first sprayer to spray a bonding liquid between first base paper and second base paper among the multiple sheets of 1-ply base paper and forming first laminated paper made up of the first base paper and the second base paper;
a seventh step of operating a second sprayer to spray the bonding liquid between third base paper and fourth base paper among the multiple sheets of 1-ply base paper and forming second laminated paper made up of the third base paper and the fourth base paper; and
an eighth step of operating a third sprayer to spray the bonding liquid between the first laminated paper and the second laminated paper, and operating a first pressure roller to stack and press the first laminated paper and the second laminated paper and to form the 4-ply toilet paper,
the sixth step and the seventh step being performed simultaneously.

2. The toilet paper roll manufacturing method according to Claim 1,
wherein the sixth step comprises applying the bonding liquid to adhere to the first base paper and the second base paper, and stacking and pressing the first base paper and the second base paper by a second pressure roller, and
the seventh step comprises applying the bonding liquid to adhere to the third base paper and the fourth base paper, and stacking and pressing the third base paper and the fourth base paper by a third pressure roller.

3. The toilet paper roll manufacturing method according to Claim 1 or 2,
wherein the eighth step comprises:
operating the second sprayer to spray the bonding liquid in an amount enough for causing fiber-to-fiber gaps in the first laminated paper and fiber-to-fiber gaps in the second laminated paper to widen due to permeation of the bonding liquid; and
operating the first pressure roller to apply pressure such that water of the bonding liquid is discharged from the fiber-to-fiber gaps in the first laminated paper and the fiber-to-fiber gaps in the second laminated paper.

## Patentansprüche

1. Verfahren zur Herstellung einer Toilettenpapierrolle, umfassend:
einen ersten Schritt, bei dem das Basispapier von jeder der mehreren Basispapierrollen abgezogen wird;
einen zweiten Schritt des Einführens mehrerer Blätter des Basispapiers in eine Laminiereinheit, des Laminierens der mehreren Blätter des Basispapiers und des Bildens von 4-lagigem Toilettenpapier;
einen dritten Schritt des Trocknens des 4-lagigen Toilettenpapiers; und
einen vierten Schritt des Aufrollens des 4-lagigen Toilettenpapiers und der Herstellung einer 4-lagigen Toilettenpapierrolle,
wobei der zweite Schritt umfasst:
einen fünften Schritt, bei dem die in die Laminiereinheit eingeführten Mehrfachbögen des Basispapiers in Mehrfachbögen von 1-lagigem Basispapier getrennt werden;
einen sechsten Schritt des Betreibens einer ersten Sprühvorrichtung, um eine Klebeflüssigkeit zwischen ein erstes Basispapier und ein zweites Basispapier der mehreren Blätter des einlagigen Basispapiers zu sprühen und ein erstes laminiertes Papier zu bilden, das aus dem ersten Basispapier und dem zweiten Basispapier besteht;
einen siebten Schritt des Betreibens einer zweiten Sprühvorrichtung, um die Klebeflüssigkeit zwischen ein drittes Basispapier und ein viertes Basispapier der mehreren Blätter des einlagigen Basispapiers zu sprühen und ein zweites laminiertes Papier zu bilden, das aus dem dritten Basispapier und dem vierten Basispapier besteht; und
einen achten Schritt des Betreibens einer dritten Sprühvorrichtung, um die Klebeflüssigkeit zwischen das erste laminierte Papier und das zweite laminierte Papier zu sprühen, und des Betreibens einer ersten Druckwalze, um das erste laminierte Papier und das zweite laminierte Papier zu stapeln und zu pressen und das vierlagige Toilettenpapier zu bilden,
wobei der sechste Schritt und der siebte Schritt gleichzeitig durchgeführt werden.

2. Verfahren zur Herstellung einer Toilettenpapierrolle nach Anspruch 1,
wobei der sechste Schritt das Auftragen der Klebeflüssigkeit, um an dem ersten Basispapier und dem zweiten Basispapier zu haften, und das Stapeln und Pressen des ersten Basispapiers und des zweiten Basispapiers durch eine zweite Druckwalze umfasst, und
der siebte Schritt das Auftragen der Klebeflüssigkeit, damit sie an dem dritten Basispapier und dem vierten Basispapier haftet, und das Stapeln und Pressen des dritten Basispapiers und des vierten Basispapiers durch eine dritte Druckwalze umfasst.

3. Verfahren zur Herstellung einer Toilettenpapierrolle nach Anspruch 1 oder 2,
wobei der achte Schritt umfasst:
das Betreiben der zweiten Sprühvorrichtung, um die Klebeflüssigkeit in einer Menge zu sprühen, die ausreicht, um zu bewirken, dass sich die Lücken zwischen den Fasern in dem ersten laminierten Papier und die Lücken zwischen den Fasern in dem zweiten laminierten Papier aufgrund der Permeation der Klebeflüssigkeit erweitern; und
das Betätigen der ersten Druckwalze, um Druck auszuüben, so dass Wasser der Klebeflüssigkeit aus den Faser-Faser-Zwischenräumen im ersten laminierten Papier und den Faser-Faser-Zwischenräumen im zweiten laminierten Papier austritt.

## Revendications

1. Procédé de fabrication de rouleau de papier hygiénique comprenant :
une première étape consistant à extraire du papier de base de chacun de multiples rouleaux de papier de base ;
une deuxième étape consistant à introduire de multiples feuilles du papier de base dans une unité de stratification, à stratifier les multiples feuilles du papier de base, et à former du papier hygiénique à quatre épaisseurs ;
une troisième étape consistant à sécher le papier hygiénique à quatre épaisseurs ; et
une quatrième étape consistant à enrouler le papier hygiénique à quatre épaisseurs et à fabriquer un rouleau de papier hygiénique à quatre épaisseurs,
dans lequel la deuxième étape comprend :
une cinquième étape consistant à séparer les multiples feuilles du papier de base introduites dans l'unité de stratification en multiples feuilles de papier de base à une épaisseur ;
une sixième étape consistant à actionner un premier pulvérisateur pour pulvériser un liquide de liaison entre un premier papier de base et un deuxième papier de base parmi les multiples feuilles de papier de base à une épaisseur et à former un premier papier stratifié constitué du premier papier de base et du deuxième papier de base ;
une septième étape consistant à actionner un deuxième pulvérisateur pour pulvériser le liquide de liaison entre un troisième papier de base et un quatrième papier de base parmi les multiples feuilles de papier de base à une épaisseur et à former un deuxième papier stratifié constitué du troisième papier de base et du quatrième papier de base ; et
une huitième étape consistant à actionner un troisième pulvérisateur pour pulvériser le liquide de liaison entre le premier papier stratifié et le deuxième papier stratifié, et à actionner un premier rouleau de pression pour empiler et presser le premier papier stratifié et le deuxième papier stratifié et pour former le papier hygiénique à quatre épaisseurs,
la sixième étape et la septième étape étant réalisées simultanément.

2. Procédé de fabrication de rouleau de papier hygiénique selon la revendication 1,
dans lequel la sixième étape comprend l'application du liquide de liaison pour adhérer au premier papier de base et au deuxième papier de base, et l'empilement et le pressage du premier papier de base et du deuxième papier de base par un deuxième rouleau de pression, et
la septième étape comprend l'application du liquide de liaison pour adhérer au troisième papier de base et au quatrième papier de base, et l'empilement et le pressage du troisième papier de base et du quatrième papier de base par un troisième rouleau de pression.

3. Procédé de fabrication de rouleau de papier hygiénique selon la revendication 1 ou 2,
dans lequel la huitième étape comprend :
l'actionnement du deuxième pulvérisateur pour pulvériser le liquide de liaison en une quantité suffisante pour amener des espaces de fibre à fibre dans le premier papier stratifié et des espaces de fibre à fibre dans le deuxième papier stratifié à s'élargir en raison de l'imprégnation du liquide de liaison ; et
l'actionnement du premier rouleau de pression pour appliquer une pression telle que l'eau du liquide de liaison est évacuée des espaces de fibre à fibre dans le premier papier stratifié et des espaces de fibre à fibre dans le deuxième papier stratifié.
